# EUROPÄISCHE PATENTSCHRIFT

(11) **EP 0 664 266 B1**
(45) Veröffentlichungstag und Bekanntmachung des Hinweises auf die Patenterteilung: **12.03.1997**
(21) Anmeldenummer: 94119815.2
(22) Anmeldetag: 15.12.1994
(51) Int. Cl.: B65G 69/28

(54) **Überladebrücke**
Loading ramp
Rampe de chargement

(30) Priorität: 21.01.1994 DE 9400973 U
(43) Veröffentlichungstag der Anmeldung: 26.07.1995
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- DE-U- 9 202 684
- DE-U- 9 400 973
- FR-A- 2 457 946
- US-A- 4 906 041

## Beschreibung

Die Erfindung betrifft eine insb. in Leichtbauweise ausgeführte Überladebrücke, vorzugsweise eine tragbare Brücke dieser Art, mit einer Brückenplatte aus zwei einander parallelen, im Abstand übereinander angeordneten ebenen Platten, zwischen denen Streben angeordnet sind (siehe zum Beispiel das DE-U-9 202 684).

Bei bekannten Brücken dieser Art sind die Platten und deren Streben einstückig z.B. durch Strangpressen gefertigt. Diese Herstellung ist vergleichsweise teuer und erlaubt nur kleine Brückenplatten, da die zum Pressen erforderlichen Mundstücke an bestimmte Abmessungen gebunden sind.

Der Erfindung liegt die Aufgabe zugrunde, Überladebrücken vorzuschlagen, die eine vergleichsweise grosse Brückenplatte erhalten können und zudem über ein nur geringes Gewicht verfügen, um so z.B. eine Brücke mit einer Breite von etwa 1 m und einer Länge von 5o - 80 cm ohne weiteres bequem von Hand bewegen bzw. tragen zu können.

Zur Lösung dieser Aufgabe werden erfindungsgemäss die Streben von einem Blech gebildet, das sich fortlaufend durch Verbiegen von einer als Blech ausgeführten Platte zu der anderen, ebenfalls als Blech ausgeführten Platte erstreckt, wobei die Verbindung zwischen dem gebogenen Blech und den ebenen, einander parallelen Blechen durch Kleben od. dgl. hergestellt sein kann. Die so aus Blechen zusammengesetzte Brückenplatte ist vergleichsweise biegesteif, zudem aber so leicht, dass die obigen Forderungen im Hinblick auf eine Handhabung der Brücke ohne weiteres erfüllt werden können.

Um zudem die so ausgeführte Brücke an ihren Rändern zu schützen und insb. am Auffahrtrand spitz auslaufen zu lassen, ist aufgrund eines weiteren Vorschlages gemäss Erfindung zumindest ein eine Platte bildendes Blech an seinem Rand zum anderen Blech hin abgebogen oder abgewinkelt, wobei dann der Raum zwischen den beiden Blechen ganz oder teilweise überbrückt wird.

Weitere Einzelheiten der Erfindung werden anhand der Zeichnung erläutert, in der ein Ausführungsbeispiel der Erfindung dargestellt ist.

Es zeigen :
Fig. 1 eine Überfahrbrücke zur Überbrückung des Spaltes z. B. zwischen einem feststehenden Plateau und einem auf einem Eisenbahnwagen befindlichen Container, um diesen be- bzw. entladen zu können,
Fig. 2 die Brücke gemäss Fig. 1 in der Seitenansicht,,
Fig. 3 einen Schnitt nach der Linie III - III von Fig. 1 und
Fig. 4 einen Schnitt nach der Linie IV - IV von Fig. 1.

Die Brückenplatte 1 hat an ihrem hinteren Ende an der Unterseite einen Haken 2 zum Eingriff in ein ortsfestes Profil, auf dem sich die Brückenplatte 1 am hinteren Ende abstützt. Dieses Profil ermöglicht auch eine Verschwenkung der Brückenplatte 1 in eine Steilstellung. Das vordere, freie Ende 1' der Brückenplatte 1 stützt sich auf dem Boden des Containers od. dgl. ab.

Es sind am Haken 2 noch Vorsprünge vorgesehen, die einen seitlichen Versatz der Brückenplatte 1 verhindern. Zudem ist am hinteren Ende der Brückenplatte 1 eine Durchbrechung vorgesehen, die als Handhabe dienen kann.

Die Brückenplatte 1 weist ihre Ebene bestimmende, einander parallele, auf Abstand angeordnete Bleche 3, 4 aus Aluminium auf, die durch ein wellenförmig gestaltetes weiteres Blech 5 aus Aluminium auf Abstand gehalten sind und mit den Kuppen der Wellung bei 5' durch Kleben verbunden sind. Die Wellen bilden somit die den Ober- und Untergurt des Trägers verbindenden Stege. Dabei erstreckt sich das Blech 5 über die gesamte Länge und Breite der Brückenplatte 1.

Das Blech 5 kann ggfs. auch zick-zack-förmig gebogen sein oder aber auch Trapeze, Rechtecke und Quadrate betimmen bzw. entsprechend geformt sein.

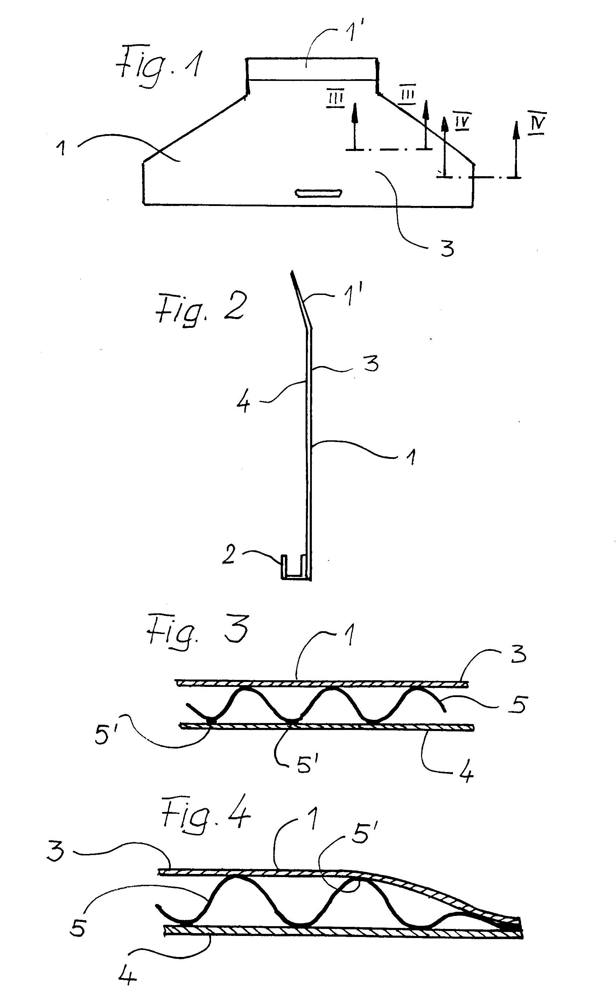

Zur Stabilisierung der Ränder der Brückenplatte 1 werden die freien Ränder eines Bleches bzw. beider Bleche 3, 4 bleibend in Richtung auf das jeweils andere Blech verformt, um so mit einfachen Mitteln einen scharfen Rand zu erzeugen, der besonders am freien Ende der Brückenplatte 1 vorteilhaft ist. Vorzugsweise wird dort und auch an den anderen Rändern das oben liegende Blech 3 in Richtung auf das untere Blech 4 abgebogen. Bei der so vorgenommenen Randgestaltung kann das Blech 5 ohne weiteres mit verformt werden und zwischen den Blechen 3, 4 eingeklemmt werden, wie dies auch aus Fig. 4 erkennbar ist. Da sich die Wellungen des Bleches 5 quer zur Überladebrücke erstrecken, muss natürlich am vorderen Rand der Brückenplatte 1 im Vergleich zu Fig. 4 eine abweichende Verformung des Bleches 5 stattfinden. Da sich dieses jedoch unter einem geeigneten Druck verformen lässt, ist es ebenfalls möglich, am freien, vorderen Rand der Brückenplatte 1 eine Verformung der Bleche 3 und 4 im Sinne der Fig. 4 zu erreichen.

Es sei noch erwähnt, dass das Blech 3 an seiner Oberseite aufgeraut oder mit Vorsprüngen versehen sein kann, um die Rutschsicherheit zu erhöhen.

Besonders vorteilhaft ist es, wenn die Wandstärke der Brückenplatte etwa 6 - 8 mm beträgt, das Blech 3 eine Dicke von etwa 1.3 - 1.8 mm, das Blech 4 eine Wandstärke von etwa o.6 - 0.8 mm und das Blech 5 eine Wandstärke von etwa 0.5. - 0.7 mm bekommt.

## Patentansprüche

1. Überladebrücke, insb. in Leichtbauweise ausgeführte Brücke, vorzugsweise als tragbare Brücke, mit einer Brückenplatte aus zwei einander parallelen, im Abstand übereinander angeordneten ebenen Platten, zwischen denen Streben angeordnet sind, dadurch gekennzeichnet, dass die Streben von einem Blech (5) gebildet sind, das so gebogen ist, dass es sich fortlaufend von einem eine Platte bildenden Blech (3) zu einem anderen, die andere Platte bildenden Blech (4) erstreckt, wobei das gebogene Blech (5) durch Kleben od. dgl. mit den anderen, eine Platte bildenden Blechen (3,4) verbunden ist.

2. Brücke nach Anspruch 1 dadurch gekennzeichnet, dass an den Rändern der Brückenplatte (1) zumindest ein Blech (3 oder 4) in Richtung auf das andere Blech (4 oder 3) abgebogen oder abgewinkelt ist unter Bildung eines sich allmählich in der Wandstärke vermindernden Randes der Brückenplatte.

3. Brücke nach Abspruch 2, dadurch gekennzeichnet, dass das unten liegende Blech (4) am Rand eben ausläuft und dass nur das obere Blech (3) abgebogen oder abgewinkelt ist.

4. Brücke nach Anspruch 2, dadurch gekennzeichnet, dass an den Rändern der Brückenplatte (1) das Blech (5) zwischen den abgebogenen bzw. abgewinkelten Blechen (3,4) bzw. zwischen einem abgebogenen bzw. abgewinkelten Blech (3) einerseits und dem anderen Blech (4) andererseits angeordnet ist.

5. Brücke nach Anspruch 1, dadurch gekennzeichnet, dass das Blech (5) wellenförmig verläuft.

6. Brücke nach Anspruch 1 und 5, dadurch gekennzeichnet, dass die Wellen quer zur Überladebrücke verlaufen.

7. Brücke nach Anspruch 1, dadurch gekennzeichnet, dass die Brückenplatte (1) eine Wandstärke von etwa 6 - 8 mm aufweist.

8. Brücke nach Anspruch 1 und 7, dadurch gekennzeichnet, dass das oben gelegene Blech (3) dicker ist als die anderen Bleche (4,5) und das gebogene Blech (5) dünner ist als das die untere Platte bildende Blech (4).

9. Brücke nach Anspruch 1, dadurch gekennzeichnet, dass die Brückenplatte (1) an ihrem hinteren Rand an der Unterseite mit einem Haken (2) zum Eingriff in ein ortsfestes Profil versehen ist.

10. Brücke nach Anspruch 9, dadurch gekennzeichnet, dass die den Haken bestimmenden Schenkel in Richtung auf das freie Ende (1') der Brücke zeigen.

## Claims

1. Bridging device, more especially a bridge of lightweight construction, preferably serving as a portable bridge, having a bridge plate formed from two flat plates, which extend parallel to each other and are disposed one above the other with a spacing therebetween, struts being disposed between said plates, characterised in that the struts are formed from a sheet (5), which is so curved that it continuously extends from one sheet (3), which forms one plate, to another sheet (4), which forms the other plate, the curved sheet (5) being connected to the other sheets (3, 4), which form one plate, by gluing or the like.

2. Bridge according to claim 1, characterised in that at least one sheet (3 or 4) is bent or bent-over at the edges of the bridge plate (1) towards the other sheet (4 or 3) so as to form an edge of the bridge plate which gradually decreases in respect of its wall thickness.

3. Bridge according to claim 2, characterised in that the lower sheet (4) has a flat edge, and in that only the upper sheet (3) is bent or bent-over.

4. Bridge according to claim 2, characterised in that the sheet (5) is disposed at the edges of the bridge plate (1) between the bent or bent-over sheets (3, 4) or respectively between a bent or bent-over sheet (3), on the one hand, and the other sheet (4), on the other hand.

5. Bridge according to claim 1, characterised in that the sheet (5) extends in an undulatory manner.

6. Bridge according to claims 1 and 5, characterised in that the undulations extend transversely relative to the bridging device.

7. Bridge according to claim 1, characterised in that the bridge plate (1) has a wall thickness of substantially 6 - 8 mm.

8. Bridge according to claims 1 and 7, characterised in that the upper sheet (3) is thicker than the other sheets (4, 5), and the curved sheet (5) is thinner than the sheet (4), which forms the lower plate.

9. Bridge according to claim 1, characterised in that the bridge plate (1) is provided on the underside of its rear edge with a hook (2) for engagement in a fixed profile.

10. Bridge according to claim 9, characterised in that the portions determining the hook extend towards the free end (1') of the bridge.

## Revendications

1. Niveleur de quai, notamment en mode de construction léger, de préférence sous la forme d'un niveleur portatif comprenant un tablier composé de deux plateaux plans, paralléles entre eux, disposés à distance l'un au-dessus de l'autre et entre lesquels sont disposées des entretoises, caractérisé en ce que les entretoises sont formées par une tôle (5) courbée de manière à s'étendre en continu d'une tôle (3) formant un plateau à une autre tôle (4) formant l'autre plateau, la tôle (5) courbée étant reliée aux autres tôles (3, 4) formant un plateau par collage ou par une opération analogue.

2. Niveleur de quai selon la revendication 1, caractérisé en ce qu'au bord du tablier (1), au moins une tôle (3 ou 4) est recourbée ou coudée en direction de l'autre tôle (4 ou 3) avec formation d'un bord du tablier dont l'épaisseur de paroi diminue peu à peu.

3. Niveleur de quai selon la revendication 2, caractérisé en ce que la tôle (4) inférieure est plane sur le bord et seule la tôle (3) supérieure est recourbée ou coudée.

4. Niveleur de quai selon la revendication 2, caractérisé en ce que sur les bords du tablier (1) la tôle (5) est disposée entre les tôles (3, 4) recourbées ou coudées ou entre une tôle (3) recourbée ou coudée d'une part et l'autre tôle (4) d'autre part.

5. Niveleur de quai selon la revendication 1, caractérisé en ce que la tôle (5) est ondulée.

6. Niveleur de quai selon l'ensemble des revendications 1 et 5, caractérisé en ce que les ondulations s'étendent transversalement au niveleur de quai.

7. Niveleur de quai selon la revendication 1, caractérisé en ce que le tablier (1) a une épaisseur de paroi de 6 à 8 mm.

8. Niveleur de quai selon l'ensemble des revendications 1 et 7, caractérisé en ce que la tôle (3) supérieure est plus épaisse que les autres tôles (4, 5) et la tôle (5) recourbée est plus mince que la tôle (4) formant le plateau inférieur.

9. Niveleur de quai selon la revendication 1, caractérisé en ce que le tablier (1) est muni sur son bord arrière, du côté inférieur, d'un crochet (2) d'accrochage à un profilé fixe.

10. Niveleur de quai selon la revendication 9, caractérisé en ce que la branche définissant le crochet est dirigé vers l'extrémité (1') libre du niveleur.
